# EUROPÄISCHE PATENTSCHRIFT

(11) **EP 0 695 756 B1**
(45) Veröffentlichungstag und Bekanntmachung des Hinweises auf die Patenterteilung: **15.03.2000**
(21) Anmeldenummer: 95111897.5
(22) Anmeldetag: 28.07.1995
(51) Int. Cl.: C07F 9/50, B01J 31/24, C09K 15/32

(54) **Verfahren zur Herstellung von Verbindung aus der Reihe der Phosphane sowie ihre Verwendung**
Process for the preparation of compounds of the phosphane series as well as their use
Procédé pour la préparation de composés de la série du phosphane et leur utilisation

(30) Priorität: 05.08.1994 DE 4427836
(43) Veröffentlichungstag der Anmeldung: 07.02.1996
(73) Patentinhaber: Celanese Chemicals Europe GmbH, 60439 Frankfurt am Main (DE)
(72) Erfinder: Naumann, Christoph, Dr., D-65527 Niedernhausen (DE); Regnat, Dieter, Dr., D-65817 Eppstein (DE)

(56) Entgegenhaltungen:
- EP-A- 0 174 174
- EP-A- 0 503 884
- US-A- 5 177 019
- Houben-Weyl, Band E1, Seiten 491 und 526, G. Thieme Verlag, Stuttgart, New York, 1982.

## Beschreibung

Die vorliegende Erfindung betrifft ein Verfahren zur Herstellung von Verbindungen aus der Reihe der Phosphane sowie ihre Verwendung.

Phosphane haben eine vielseitige technische Anwendung gefunden. Sie eignen sich beispielsweise als Antioxidantien, Metallextraktionsmittel, Flammschutzimprägniermittel, Stabilisierungsmittel für Olefine (US 6-400,168 (NTIS); Chem. Abstr. 100; 122286b) und Trioxan (US 4 125 540), Ausgangsverbindungen für Wittig-Reagentien oder Liganden für Metallkomplexkatalysatoren.

Aufgrund ihrer Formenvielfalt stellen sie auch Vorprodukte zur Herstellung weiterer, gegebenenfalls Phosphor enthaltender, organischer Verbindungen dar.

Aus der EP-A-503 884 sind optisch aktive, tertiäre Phosphane bekannt, die zur Herstellung von Metallkomplexkatalysatoren verwendet werden.

In Anbetracht der weitreichenden Bedeutung, die Verbindungen aus der Reihe der Phosphane zukommt, stellt es eine lohnende Aufgabe dar, neue für Herstellungswege Verbindungen aus dieser Gruppe von Stoffen bereitzustellen.

Diese Aufgabe wird gelöst durch die Herstellung von Phosphanen der allgemeinen Formel (I) 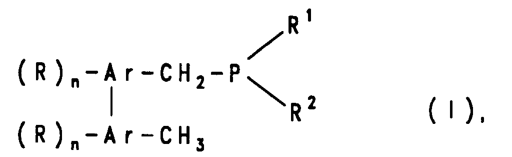 worin Ar-Ar für einen Biphenylrest, einen 1-Phenylnaphthylrest oder einen 1,1'-Binaphthylrest steht, die CH₂-Gruppe und der CH₃-Rest jeweils in ortho-Stellung zur Ar-Ar-Bindung angeordnet ist, R für F, einen Alkylrest oder Alkoxyrest mit jeweils 1 bis 8 Kohlenstoffatomen steht, n eine ganze Zahl von 0 bis 4 ist, R¹ und R² gleich oder verschieden sind und unabhängig voneinander für einen Alkylrest mit 1 bis 10 Kohlenstoffatomen, einen cycloaliphatischen Rest mit 5 bis 10 Kohlenstoffatomen, oder für einen Rest Ar¹-(R³)ₘ stehen, wobei Ar¹ ein Phenyl- oder Naphthylrest ist, R³ für F, Cl, CF₃, SO₃H, SO₃Me (Me = Li, Na oder K), einen Dialkylaminorest mit 2 bis 8 Kohlenstoffatomen, einen Alkylrest oder Alkoxyrest mit jeweils 1 bis 8 Kohlenstoffatomen steht und m eine ganze Zahl von 0 bis 5 ist, oder R¹ und R² zusammen mit dem P-Atom einen Ring mit 4 bis 8 Gliedern bilden, woran gegebenenfalls ein oder zwei aromatische, 6 bis 10 Kohlenstoffatome umfassende Ringe oder Ringsysteme anneliert sind.

Die Phosphane der allgemeinen Formel (I) stellen aufgrund ihres chemischen Verhaltens, das auf den Einbau eines trivalenten P-Atoms in das Molekül zurückzuführen sein dürfte, und wegen ihrer besonderen Struktur interessante Verbindungen dar. Die besondere Struktur der Phosphane geht auf den H₃C-Ar(R)ₙ-Ar(R)ₙ-CH₂-Rest zurück. Ein besonderes Merkmal der neuen Phosphane besteht darin, daß viele dieser Phosphane ein oder mehrere Asymmetriezentren aufweisen. In einer Reihe von Fällen kann das tertiäre P-Atom als Asymmetriezentrum fungieren. Es sind jedoch in einer Vielzahl von Verbindungen auch Asymmetriezentren vorhanden, die aus der H₃C-Ar(R)ₙ-Ar(R)ₙ-CH₂-Gruppierung resultieren.

Somit eröffnen die neuen Phosphane der allgemeinen Formel (I) auch den Zugang zu den entsprechenden optisch aktiven Isomeren, beispielsweise zu diastereomeren Phosphanen oder zu enantiomeren Phosphanen, die ihrerseits unter anderem als Hilfstoffe bei der Durchführung asymmetrischer Synthesen Anwendung finden können.

Darüber hinaus bieten sich die neuen Phosphane aufgrund ihres chemischen Verhaltens und ihrer Reaktivität und wegen ihrer besonderen Struktur als Bausteine zur Herstellung weiterer, gegebenenfalls Phosphor enthaltender, organischer Verbindungen an.

Die Herstellung von Phosphanen der Formel (I), worin Ar-Ar für einen Biphenylrest, einen 1-Phenylnaphthylrest oder einen 1,1'-Binaphthylrest und R für einen Alkyrest oder Alkoxyrest mit jeweils 1 bis 4 Kohlenstoffatomen steht, spielt eine besondere Rolle, da diese vergleichsweise leicht zugänglich sind.

Dies trifft auch auf Phosphane der Formel (I) zu, worin n für 0 oder 1, insbesondere n für 0 steht.

Von Interesse ist auch die Herstellung von Phosphanen der Formel (I), in denen R¹ und R² gleich oder verschieden sind und unabhängig voneinander für einen Alkylrest mit 1 bis 6 Kohlenstoffatomen, einen cycloaliphatischen Rest mit 5 bis 6 Kohlenstoffatomen oder für einen Rest Ar¹-(R³)ₘ stehen, wobei Ar¹ ein Phenylrest ist, R³ für F, CF₃ oder einen Alkylrest mit 1 bis 4 Kohlenstoffatomen und m für 0 oder 1 steht, oder R¹ und R² zusammen mit dem P-Atom einen Ring bilden und für CH₂-Ar(R)ₙ-Ar(R)ₙ-CH₂ stehen.

Falls die Phosphane der Formel (I) ein Asymmetriezentrum besitzen und somit die Bedingungen für das Vorliegen optischer Isomerer erfüllen, liegen sie in der (R,S)-Form, in der (R)-Form oder in der (S)-Form vor. Im Zusammenhang mit der Durchführung asymmetrischer Synthesen sind Phosphane in der (R)-Form und der (S)-Form von Interesse.

Sie lassen sich mit guter Aussicht auf Erfolg sowohl in der (R)-Form oder (SI-Form als optisch aktive Bausteine verwenden, um weitere gegebenenfalls optisch aktive und gebenenfalls Phosphor enthaltende Verbindungen in der (R)-Form oder (S)-Form zu synthetisieren.

Von besonderem Interesse ist die Herstellung von Phosphanen der allgemeinen Formel (I), in denen Ar-Ar für 1,1'-Binaphthyl und das Phosphan in der (R,S)-Form, in der (R)-Form oder (S)-Form vorliegt und n gegebenenfalls für 0 oder 1, insbesondere 0 steht. Diese Verbindungen sind nicht nur in der (R,S)-Form leicht zugänglich, sondern lassen sich auch in der (R)-Form ebenso wie in der (S)-Form mit vertretbarem Aufwand herstellen.

Ohne Anspruch auf Vollständigkeit zu erheben, seien als typische Vertreter der erfindungsgemäss herstellbaren Phosphane der Formel (I) folgende Verbindungen genannt:
(R,S)-2-Diphenylphosphinomethyl-2'-methyl-1,1'-binaphthyl
(R)-2-Diphenylphosphinomethyl-2'-methyl-1,1'-binaphthyl
(S)-2-Diphenylphosphinomethyl-2'-methyl-1,1'-binaphthyl
2-Diphenylphosphinomethyl-2'-methylbiphenyl
(R,S)-2-Diisopropylphosphinomethyl-2'-methyl-1,1'-binaphthyl
(R)-2-Diisopropylphosphinomethyl-2'-methyl-1,1'-binaphthyl
(S)-2-Diisopropylphosphinomethyl-2'-methyl-1,1'-binaphthyl
(R,S)-2-Dimethylphosphinomethyl-2'-methyl-1,1'-binaphthyl
(R)-2-Dimethylphosphinomethyl-2'-methyl-1,1'-binaphthyl
(S)-2-Dimethylphosphinomethyl-2'-methyl-1,1'-binaphthyl
(R,S)-2-Bis(1-methylpropyl)phosphinomethyl-2'-methyl-1,1'-binaphthyl
(R)-2-Bis(1-methylpropyl)phosphinomethyl-2'-methyl-1,1'-binaphthyl
(S)-2-Bis(1-methylpropyl)phosphinomethyl-2'-methyl-1,1'-binaphthyl
(R,S)-2-Bis(3-fluorphenyl)phosphinomethyl-2'-methyl-1,1'-binaphthyl
(R)-2-Bis(3-fluorphenyl)phosphinomethyl-2'-methyl-1,1'-binaphthyl
(S)-2-Bis(3-fluorphenyl)phosphinomethyl-2'-methyl-1,1'-binaphthyl
(R,S)-2-Bis(4-methoxyphenyl)phosphinomethyl-2'-methyl-1,1'-binaphthyl
(R)-2-Bis(4-methoxyphenyl)phosphinomethyl-2'-methyl-1,1'-binaphthyl
(S)-2-Bis(4-methoxyphenyl)phosphinomethyl-2'-methyl-1,1'-binaphthyl
(R,S)-2-Bis(4-N,N-dimethylaminophenyl)phosphinomethyl-2'-methyl,1,1'-binaphthyl
(R)-2-Bis(4-N,N-dimethylaminophenyl)phosphinomethyl-2'-methyl,1,1'-binaphthyl
(S)-2-Bis(4-N,N-dimethylaminophenyl)phosphinomethyl-2'-methyl,1,1'-binaphthyl
(R,S)-6,6-Dibrom-2-diphenylphosphinomethyl-2'-methyl-1,1'-binaphthyl
(R)-6,6-Dibrom-2-diphenylphosphinomethyl-2'-methyl-1,1'-binaphthyl
(S)-6,6-Dibrom-2-diphenylphosphinomethyl-2'-methyl-1,1'-binaphthyl
(R,S)-2-Bis(2-tolylphenyl)phosphinomethyl-2'-methyl-1,1'-binaphthyl
(R)-2-Bis(2-tolylphenyl)phosphinomethyl-2'-methyl-1,1'-binaphthyl
(S)-2-Bis(2-tolylphenyl)phosphinomethyl-2'-methyl-1,1'-binaphthyl

Die vorliegende Erfindung betrifft ein Verfahren zur Herstellung von Phosphanen der allgemeinen Formel (I)

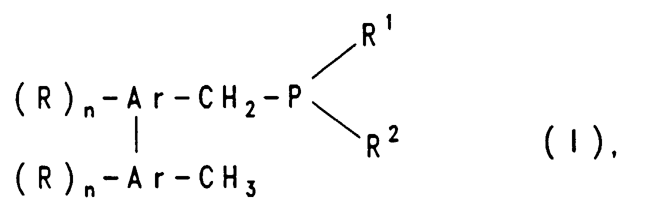

Es ist dadurch gekennzeichnet, daß man eine Verbindung der allgemeinen Formel (II) 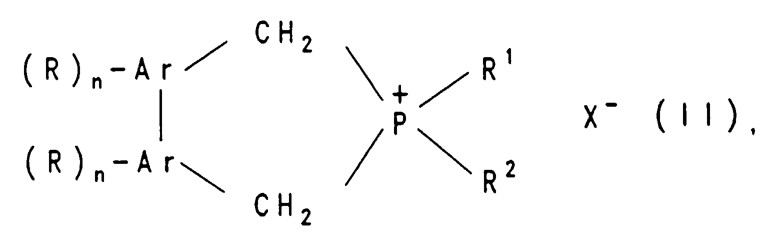 worin Ar-Ar für einen Biphenylrest, einen 1-Phenylnaphthylrest oder einen 1,1'-Binaphthylrest steht, die CH₂-Gruppe jeweils in ortho-Stellung zur Ar-Ar-Bindung angeordnet ist, R für F, einen Alkylrest oder Alkoxyrest mit jeweils 1 bis 8 Kohlenstoffatomen steht, n eine ganze Zahl von 0 bis 4 ist, R¹ und R² gleich oder verschieden sind und unabhängig voneinander für einen Alkylrest mit 1 bis 10 Kohlenstoffatomen, einen cycloaliphatischen Rest mit 5 bis 10 Kohlenstoffatomen, oder für einen Rest Ar¹-(R³)ₘ stehen, wobei Ar¹ ein Phenyl- oder Naphthylrest ist, R³ für F, Cl, CF₃, SO₃H, SO₃Me (Me = Li, Na oder K), einen Dialkylaminorest mit 2 bis 8 Kohlenstoffatomen, einen Alkylrest oder Alkoxyrest mit jeweils 1 bis 8 Kohlenstoffatomen steht und m eine ganze Zahl von 0 bis 5 ist, oder R¹ und R² zusammen mit dem P-Atom einen Ring mit 4 bis 8 Gliedern bilden, woran gegebenenfalls ein oder zwei aromatische, 6 bis 10 Kohlenstoffatome umfassende Ringe oder Ringsysteme anneliert sind, und X⁻ ein einwertiges Anion oder das Äquivalent eines mehrwertigen Anions einer Mineralsäure, Carbonsäure, Sulfonsäure oder eines Alkohols darstellt, mit einer wäßrigen Lösung einer Base, gegebenenfalls in Anwesenheit eines Lösungsvermittlers, umsetzt, das dabei sich bildende Phosphanoxid der allgemeinen Formel (III) 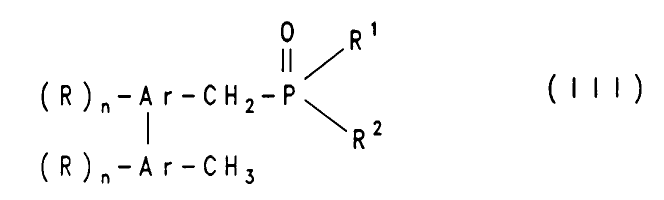 isoliert und dieses anschließend, gegebenenfalls in Anwesenheit eines inerten Lösungsmittels, zum Phosphan der Formel (I) reduziert oder die Verbindung der Formel (II), gegebenenfalls in Anwesenheit eines inerten Lösungsmittels, mit einem Reduktionsmittel direkt zum Phosphan der Formel (I) umsetzt.

Die Umsetzung verläuft entweder in zwei Schritten entsprechend den Gleichungen (A₁) und (A₂), wobei R, n, Ar-Ar, R¹ und R² in dem gemäß Gleichung (A₁) gebildeten Phosphanoxid der Formel (III) dieselbe Bedeutung wie in Formel (I) und (II) haben, 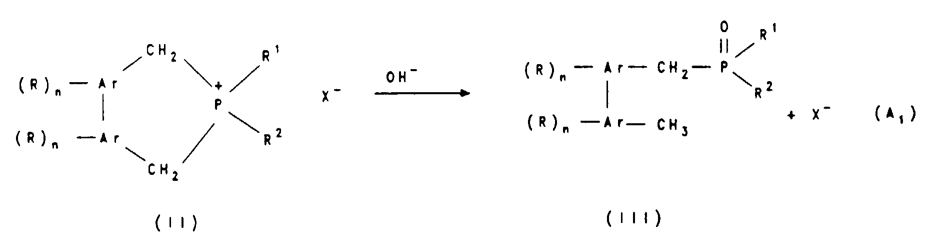 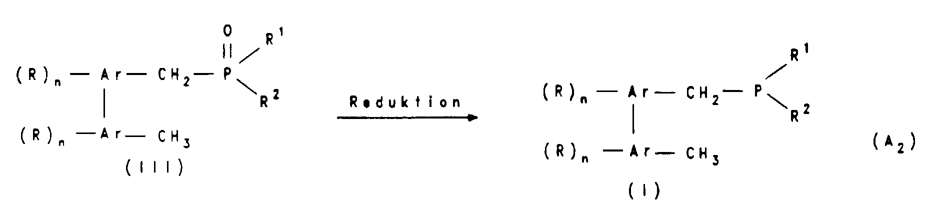 oder sie führt entsprechend Gleichung (B) 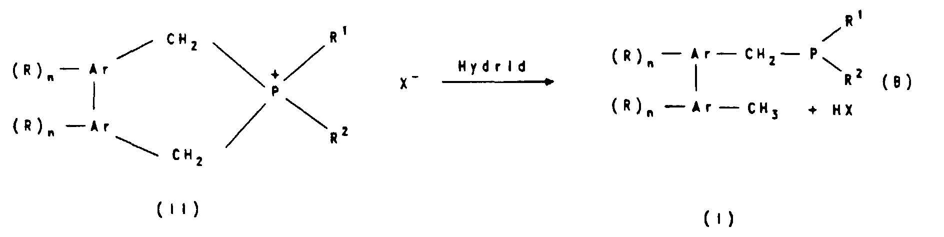 direkt zum Phosphan der Formel (I).

Ein Vorteil des erfindungsgemäßen Verfahrens besteht darin, daß man vergleichsweise leicht zugängliche Ausgangsstoffe verwenden kann. Dies trifft sowohl auf die Verbindungen der Formel (II) als auch auf die Hilfsstoffe (Base und Reduktionsmittel) zu. Ein weiterer Vorteil ist, daß sich die Umsetzung ohne großen apparativen Aufwand realisieren läßt. Darüber hinaus verläuft die Reaktion mit hoher Selektivität und liefert die gewünschten Endprodukte (Verbindungen der Formel (I)) in hoher Ausbeute. Die Reinheit der dabei anfallenden Endprodukte ist üblicherweise so gut, daß man bereits durch einfaches Auskristallisieren aus der unmittelbar anfallenden Reaktionsmischung ein sehr reines Endprodukt erhalten kann. Auf eine zusätzliche Reinigung, die einen weiteren technischen Aufwand erfordert und in der Regel eine Verringerung der Ausbeute zur Folge hat, kann in diesem Falle verzichtet werden.

Für das Verfahren spielen Verbindungen der Formel (II), worin Ar-Ar für einen Biphenylrest, einen 1-Phenylnaphthylrest oder einen 1,1'-Binaphthylrest und R für einen Alkylrest oder Alkoxyrest mit jeweils 1 bis 4 Kohlenstoffatomen steht, eine besondere Rolle, da sie vergleichsweise leicht zugänglich sind und in recht großer Auswahl zur Verfügung gestellt werden können. Dies trifft auch auf Verbindungen der Formel (II), worin n für 0 oder 1, insbesondere für 0, steht, zu. Beispiele für die Herstellung verwandter Verbindungen finden sich in Houben-Weyl, Band E1, S. 491 und 526, G. Thieme Verlag, Stuttgart, New York, 1982.

Ein weiterer Vorteil des erfindungsgemäßen Verfahrens ist darin zu sehen, daß sich in einer Reihe von Fällen optisch aktive Phosphane der Formel (I) sowohl in der (R)-Form als auch in der (S)-Form herstellen lassen.

Es ist allgemein bekannt, daß es sehr schwierig ist, ein racemisches Gemisch in enantiomerenreine oder auch nur weitgehend enantiomerenreine Verbindungen aufzutrennen. Derartige Racematspaltungen sind im allgemeinen mit einem sehr hohen Aufwand verbunden und führen darüberhinaus meist nicht zum Erfolg.

Durch Umsetzung der Verbindung der Formel (II) in der (R)-Form oder in der (S)-Form entsprechend den Gleichungen (A₁) und (A₂) oder (B) eröffnet das erfindungsgemäße Verfahren überraschenderweise einen sehr einfachen Weg zur direkten Herstellung von Phosphanen der Formel (I) in der (R)-Form und der (S)-Form. Da sich die (R)- und die (S)-Form der als Ausgangstoffe verwendeten Phosphoniumsalze gezielt synthetisieren läßt und die unter Ringöffnung und Reduktion verlaufende Umsetzung der Phosphoniumsalze (II) nicht zu einer Racemisierung oder zu einer vollständigen Abspaltung einer Phosphor enthaltenden organischen Verbindung führt, kann auf eine aufwendige Racematspaltung, deren Erfolgsaussichten obendrein sehr ungewiß sind, verzichtet werden. Die enantiomerenreinen oder weitgehend enantiomerenreinen Phosphoniumsalze lassen sich durch einfaches Kristallisieren direkt aus dem Reaktionsgemisch gewinnen und durch Filtration isolieren.

Je nach Bedarf setzt man eine Verbindung der Formel (II) in der (R,S)-Form, in der (R)-Form oder in der (S)-Form ein und erhält das entsprechende Phosphan in der (R,S)-Form, in der (R)-Form oder in der (S)-Form.

Von besonderem Interesse ist es, Verbindungen der Formel (II), worin Ar-Ar für 1,1'-Binaphthyl steht, in der (R,S)-Form, in der (R)-Form und in der (S)-Form einzusetzen. Insbesondere ist es interessant, diese Verbindungen in der (R)-Form oder (S)-Form einzusetzen, um die entsprechenden Phosphane herzustellen.

Man setzt im allgemeinen die Verbindungen der Formel (II) ein, worin R¹ und R² gleich oder verschieden sind und unabhängig voneinander für einen Alkylrest mit 1 bis 6 Kohlenstoffatomen, einen cycloaliphatischen Rest mit 5 bis 6 Kohlenstoffatomen oder für einen Rest Ar¹-(R³)ₘ stehen, wobei Ar¹ ein Phenylrest ist, R³ für F, CF₃ oder einen Alkylrest mit 1 bis 4 Kohlenstoffatomen und m für 0 oder 1 steht oder R¹ und R² zusammen mit dem P-Atom einen Ring bilden und für CH₂-Ar(R)ₙ-Ar(R)ₙ-CH₂ stehen.

Wie zuvor im Zusammenhang mit der Verbindung der Formel (II) bereits erwähnt, ist X⁻ ein einwertiges Anion oder das Äquivalent eines mehrwertigen Anions einer Mineralsäure, Carbonsäure, Sulfonsäure oder eines Alkohols.

Ohne Anspruch auf Vollständigkeit zu erheben, seien als einwertiges Anion F⁻, Cl⁻, Br⁻, J⁻, NO₃⁻, HSO₄⁻, HCO₃⁻, BF₄⁻, PF₆⁻, H₂PO₄⁻, ClO₄⁻, R⁴COO⁻, worin R⁴ für H, einen Alkylrest mit 1 bis 7 Kohlenstoffatomen oder einen Arylrest mit 6 bis 10 Kohlenstoffatomen steht, R⁵SO₃⁻, worin R⁵ einen F-, CF₃-, CH₃-, Phenyl- oder Tolyl-Rest darstellt, oder R⁶O⁻, worin R⁶ einen Rest mit 1 bis 10 Kohlenstoffatomen darstellt, genannt oder als Äquivalent eines mehrwertigen Anions seien 1/2 SO₄²⁻, 1/2 HPO₄²⁻, 1/2 CO₃²⁻ oder 1/2 Anion einer Dicarbonsäure mit 2 bis 6 Kohlenstoffatomen genannt.

Man verwendet üblicherweise als Base ein Oxid, Hydroxid oder Carbonat eines Alkalimetalls oder Erdalkalimetalls, insbesondere ein Alkalimetallhydroxid oder Erdalkalimetallhydroxid.

Die Base wird in Form einer wäßrigen Lösung eingesetzt. Die wäßrige Lösung enthält 1 bis 35, insbesondere 2 bis 30 bevorzugt 4 bis 25 Gew.-% Base. Besonders geeignet ist eine wäßrige NaOH, Na₂CO₃, KOH und/oder K₂CO₃ enthaltende Lösung.
Das Molverhältnis Base zu Phosphoniumsalz beträgt üblicherweise (2 bis 60):1, insbesondere (6 bis 40):1, bevorzugt (10 bis 30):1.

In einer Reihe von Fällen kann es nützlich sein, die Umsetzung der Verbindung der Formel (I) mit der wäßrigen Lösung der Base in Anwesenheit eines Lösungsvermittlers durchzuführen. Es ist jedoch auch möglich auf den Zusatz eines Lösungsvermittlers zu verzichten, muß hierbei allerdings unter Umständen längere Reaktionszeiten in Kauf nehmen.

Als Lösungsvermittler eignet sich ein polares, mit Wasser mischbares Lösungsmittel, beispielsweise ein aliphatischer Alkohol mit 1 bis 4 Kohlenstoffatomen, Tetrahydrofuran, Dioxan, Acetonitril, N,N-Dimethylformamid oder N,N-Dimethylacetamid. Es lassen sich auch Mischungen dieser polaren, mit Wasser mischbaren organischen Lösungsmittel als Lösungsvermittler verwenden. Als Lösungsvermittler können auch Phasentransferkatalysatoren, beispielsweise Kronenether, wie 18-Krone-6, oder quartäre Ammoniumsalze, wie Tetrabutylammoniumsalze, Anwendung finden.

Verwendet man ein polares, mit Wasser mischbares organisches Lösungsmittel als Lösungsvermittler, so verwendet man 5 bis 100, insbesondere 10 bis 50 Vol.-% desselben, bezogen auf das Volumen der wäßrigen Lösung der Base. Falls man einen Phasentransferkatalysator als Lösungsvermittler anwenden will, so erweist sich zumeist eine Menge von (0 bis 5) Gew.-%, bezogen auf die Phosphoniumverbindung der Formel (II) als ausreichend.

Man führt die Umsetzung üblicherweise bei 0 bis 120, insbesondere 10 bis 110, bevorzugt 20 bis 100°C durch.

Es versteht sich von selbst, daß während der Umsetzung für eine gute Durchmischung zu sorgen ist.

Infolge der Reaktion der Phosphoniumverbindung der Formel (II) mit der Base bildet sich gemäß Gleichung (A₁) das Phosphanoxid der Formel (III), das isoliert wird.

Besonders einfach ist es, das Phosphanoxid der Formel (III) durch Extraktion, beispielsweise durch Extraktion mittels eines wasserunlöslichen organischen Lösungsmittels zu isolieren.

Die Extraktion läßt sich mittels eines chlorierten aliphatischen Kohlenwasserstoffs, eines aromatischen Kohlenwasserstoffs, eines aliphatischen Ketons mit 4 bis 12 Kohlenstoffatomen oder eines Esters einer aliphatischen Carbonsäure mit 2 bis 6 Kohlenstoffatomen, beispielsweise mittels Methylenchlorid, Dichlorethan, Chloroform, Toluol, o-Xylol, m-Xylol, p-Xylol, eines Gemisches isomerer Xylole, Essigsäuremethylester, Essigsäureethylester, 2-Butanon oder 3-Pentanon durchführen.

Anschließend wird das Phosphanoxid der Formel (III) gegebenenfalls in Anwesenheit eines inerten Lösungsmittel mittels eines Hydrids oder mittels eines gegebenenfalls in Anwesenheit eines tertiären Amins verwendeten Organylsilans, Organyldichlorsilans oder Trichlorsilan zum Phosphan der Formel (I) reduziert. Geeignet als inertes Lösungsmittel sind beispielsweise Toluol, o-Xylol, m-Xylol, p-Xylol, Gemische isomerer Xylole, Dioxan oder Acetonitril oder Mischungen dieser Lösungsmittel.

Als Hydrid kommt beispielsweise Lithiumaluminiumhydrid und als Organyldichlorsilan kommen Methyldichlorsilan, Ethyldichlorsilan oder Phenyldichlorsilan in Betracht.
Man reduziert das Phosphanoxid der Formel (III) üblicherweise bei 20 bis 170, insbesondere 40 bis 160, bevorzugt 60 bis 150°C.

Das erfindungsgemäße Verfahren läßt sich in einer Reihe von Fällen, besonders einfach gestalten, indem man nicht - wie zuvor beschrieben - gemäß Gleichung (A₁) das Phosphanoxid der Formel (III) bildet und dieses anschließend gemäß Gleichung (A₂) reduziert, sondern indem man die Phosphoniumverbindung der Formel (II) durch Reduktion (reduktive Ringöffnung) direkt in das Phosphan der Formel (I) gemäß Gleichung (B) überführt. Man führt die Reduktion, gegebenenfalls in Anwesenheit eines inerten Lösungsmittels, beispielsweise Tetrahydrofuran, Dioxan, Toluol, o-Xylol, m-Xylol, p-Xylol, eines Gemisches isomerer Xylole, Ethylbenzol, n-Heptan oder ein hochsiedender Petrolether (Siedepunkt ≥ 100°C) unter Verwendung eines Hydrids als Reduktionsmittel durch. Geeignete Hydride sind beispielsweise Natriumhydrid, Kaliumhydrid, Lithiumaluminiumhydrid, Natriumborhydrid, Diisobutylaluminiumhydrid oder Natriumdihydrido-bis(2-methoxy)-aluminat, insbesondere Natriumhydrid, Lithiumaluminiumhydrid oder Natriumdihydrido-bis-(2-methoxy)aluminat.

Man setzt die Verbindung der Formel (II) mit dem Reduktionsmittel bei 50 bis 200, insbesondere 60 bis 160, bevorzugt 70 bis 150°C gemäß Gleichung (B) direkt zum Phosphan der Formel (I) um.

Das erfindungsgemäße Verfahren läßt sich generell kontinuierlich oder diskontinuierlich durchführen. Es eignet sich insbesondere für eine diskontinuierliche Durchführung.

Die Phosphane der Formel (I) eignen sich als Antioxidantien und als Bestandteile von Katalysatorsystemen.

Die nachfolgenden Beispiele beschreiben die Erfindung, ohne sie zu beschränken.

### Experimenteller Teil

Die Beispiele 1a bis 4a betreffen die Herstellung von Phosphanoxiden gemäß Gleichung (A₁), die Beispiele 1b bis 4b betreffen die Reduktion der Phosphanoxide gemäß Gleichung (A₂), während die Beispiele 5 bis 9 die direkte Reduktion gemäß Gleichung (B) belegen.

### Beispiel 1a:

### Herstellung von 2-Diphenylphosphinylmethyl-2'-methyl-1,1'-binaphthyl

4 g (7,3 mMol) 4,4-Diphenyl-4,5-dihydro-3H-dinaphtho-[2,1-c: 1',2'-e]phosphepiniumbromid werden in einem Gemisch aus 80 ml 2N Natronlauge und 30 ml Ethanol suspendiert und 4 Stunden zum Sieden erhitzt. Anschließend wird die Reaktionslösung bei 12 Torr/40°C bis zur Trockene eingeengt. Der Rückstand wird in 80 ml Dichlormethan aufgenommen und zweimal mit je 30 ml Wasser extrahiert. Die organische Phase wird über Natriumsulfat getrocknet und bei 12 Torr/40°C bis zur Trockene eingeengt. Man erhält farblose Kristalle (Schmelzpunkt: 199,5°C).
Ausbeute: 3,3 g (88 % d.Th.)
³¹P-NMR-Spektrum:
(CDCl₃) δ = 29,8 ppm
FAB-Massenspektrum
M^{┐ +} = 483

### Beispiel 1b:

### Herstellung von 2-Diphenylphosphinomethyl-2'-methyl-1,1'-binaphthyl durch Reduktion von 2-Diphenylphosphinylmethyl-2'-methyl-1,1'-binaphthyl mit Methyldichlorsilan

2,9 g (6,0 mMol) 2-Diphenylphosphinylmethyl-2'-methyl-1,1'-binaphthyl werden in 15 ml Xylol suspendiert und es werden 5,6 g (30 mMol) Tributylamin zugegeben. Man erwärmt unter Rühren 3 Stunden zum Rückfluß, um die Suspension von Sauerstoff zu befreien. Anschließend kühlt man auf Raumtemperatur ab und läßt aus einem Tropftrichter rasch 3,3 g (29 mMol) Methyldichlorsilan zulaufen. Man erhitzt zum Rückfluß, wobei die Innentemperatur langsam innerhalb von 12 bis 13 Stunden von 100°C auf 146°C gesteigert wird. Anschließend destilliert man Xylol bei Normaldruck ab, läßt abkühlen und versetzt den Rückstand bis zur Kristallisation mit i-Propanol. Die farblosen Kristalle werden abgesaugt und bei 12 Torr/40°C getrocknet.
Ausbeute: 1,2 g (41,5 % d.Th.)
Schmelzpunkt: 134°C
³¹P-NMR-Spektrum:
(Benzol-d₆) δ = -12.0 ppm

### Beispiel 2a:

### Herstellung von 2-Di-(1'-methylpropyl)phosphinylmethyl-2'-methyl-1,1'-binaphthyl

4 g (7,9 mMol) 4,4-Di-(1'-methylpropyl)-4,5-dihydro-3H-dinaphthyl-[2,1-c:1',2'-e]phosphepiniumbromid werden analog Beispiel 1a umgesetzt.
Man erhält ein farbloses Öl.
Ausbeute: 3,3 g (99 % d.Th.)
³¹P-NMR-Spektrum
(CDCl₃) 55,61 55,46 55,37 55,24 ppm im Verhältnis 1:1:1:1
FAB-Massenspektrum
M^{┐ +} = 442

### Beispiel 2b:

### Herstellung von 2-Di-(1'-methylpropyl)phosphinomethyl-2'-methyl-1,1'-binaphthyl

2 g (4,52 mMol) 2-Di-(1'-methylpropyl)phosphinylmethyl-2'-methyl-1,1'-binaphthyl werden analog Beispiel 1b umgesetzt.
Man erhält ein farbloses Öl.
Ausbeute: 1,24 g (65 % d.Th.)
³¹P-NMR-Spektrum
(Benzol-d₆) δ = 1,64; 0,70; 0,43; 0,04 ppm im Verhältnis 1:1:1:1

### Beispiel 3a:

### Herstellung von 2-Diisopropylphosphinylmethyl-2'-methyl-1,1'-binaphthyl

4 g (8,4 mMol) 4,4-Diisopropyl-4,5-dihydro-3H-dinaphtho-[2,1-c:1',2'-e]phosphepiniumbromid werden analog Beispiel 1a umgesetzt.
Man erhält ein wachsartiges Produkt.
Ausbeute: 3,4 g (97 % d.Th.)
³¹P-NMR-Spektrum:
(CDCl₃) δ = 55,8 ppm
FAB-Massenspektrum:
M^{┐ +} = 414

### Beispiel 3b:

### Herstellung von 2-Diisopropylphosphinomethyl-2'-methyl-1,1'-binaphthyl

2 g (4,83 mMol) 2-Diisopropylphosphinylmethyl-2'-methyl-1,1'-binaphthyl werden analog Beispiel 1b umgesetzt.
Man erhält ein farbloses Öl.
Ausbeute: 1,34 g (70 % d.Th.)
³¹P-NMR-Spektrum
(Benzol-d₆) δ = 7,70 ppm

### Beispiel 4a:

### Herstellung von 2-Diphenylphosphinylmethyl-2'-methyl-biphenyl

1,0 g (2,25 mMol) 6,6-Diphenyl-6,7-dihydro-5H-dibenzo[c,e]-phosphepiniumbromid werden analog Beispiel 1 umgesetzt.
Man erhält ein öliges Produkt.
Ausbeute: 600 mg (70 % d.Th.)
³¹P-NMR-Spektrum:
(CDCl₃) δ = 30,1 ppm
FAB-Massenspektrum:
M^{┐ +} = 382

### Beispiel 4b:

### Herstellung von 2-Diphenylphosphinomethyl-2'-methyl-biphenyl

2 g (5,23 mMol) 2-Diphenylphosphinylmethyl-2'-methyl-biphenyl werden analog Beispiel 1b umgesetzt.
Man erhält farblose Kristalle (Schmelzpunkt: 85-86°C).
Ausbeute: 1,14 g (60 % d.Th.)
³¹P-NMR-Spektrum:
(Benzol-d₆) δ = -9,4 ppm

### Beispiel 5:

### Herstellung von 2-Diphenylphosphinomethyl-2'-methyl-1,1'-binaphthyl

4 g (7,3 mMol) 4,4-Diphenyl-4,5-dihydro-3H-dinaphthol[2,1-c:1',2'-e]phosphepiniumbromid werden unter Schutzgas in 70 ml absolutem Toluol suspendiert. Zu dieser Suspension gibt man 500 mg (14,3 mMol) Lithiumaluminiumhydrid und erhitzt die Reaktionslösung 5 Stunden zum Sieden. Anschließend wird nicht umgesetztes Lithiumaluminiumhydrid abfiltriert. Die organische Phase wird mit 20 ml 1N Natronlauge und anschließend mit jeweils 20 ml Wasser solange extrahiert, bis die wäßrige Phase pH 6 bis 7 besitzt. Die organische Phase wird über Natriumsulfat getrocknet und das Toluol bei 12 Torr/40°C abgezogen. Der wachsartige Rückstand wird mit 15 ml sauerstofffreiem Isopropanol versetzt, aufgekocht und zur Kristallisation gebracht.
Ausbeute: 2,4 g (71 % d.Th.)
Schmelzpunkt: 134°C
³¹P-NMR-Spektrum
(Benzol-d₆) δ = -12,0 ppm
FAB-Massenspektrum:
M^{┐ +} = 466

### Beispiel 6:

### Herstellung von 2-Diphenylphosphinomethyl-2'-methyl-biphenyl

4 g (9,0 mMol) 6,6-Diphenyl-6,7-dihydro-5H-dibenzo[c,e]phosphepiniumbromid werden in 70 ml absolutem Toluol unter Schutzgas suspendiert und mit 680 mg (18 mMol) Lithiumaluminiumhydrid analog Beispiel 5 umgesetzt.
Man erhält farblose Kristalle (Schmelzpunkt: 86°C).
Ausbeute: 2,3 g (70 % d.Th.)
³¹P-NMR-Spektrum
(Benzol-d₆) δ = -9,3 ppm
FAB-Massenspektrum:
M^{┐ +} = 366

### Beispiel 7:

### Herstellung von 2-Di(1'-methylpropyl)phosphinomethyl-2'-methyl-1,1'-binaphthyl

4 g (7,9 mMol) 4,4-Di-(1'-methylpropyl)-4,5-dihydro-3H-dinaphtho[2,1-c: 1',2'-e]phosphepiniumbromid werden in 70 ml absolutem Xylol suspendiert und mit 400 mg (10,5 mMol) Lithiumaluminiumhydrid analog Beispiel 5 umgesetzt.
Man erhält ein farbloses Öl.
Ausbeute: 3,0 g (88 % d.Th.)
³¹P-NMR-Spektrum:
(Benzol-d₆) δ = 1,64;0,70;0,43;0,04 ppm im Verhältnis 1:1:1:1
FAB-Massenspektrum:
M^{┐ +} = 426

### Beispiel 8:

### Herstellung von 2-Diisopropylphosphinomethyl-2'-methyl-1,1'-binaphthyl

4 g (8,4 mMol) 4,4-Diispropyl-4,5-dihydro-3H-dinaphtho[2,1-c:1',2'-e]-phosphepiniumbromid werden in 70 ml absolutem Toluol unter Schutzgas suspendiert und mit 400 mg (10,5 mMol) Lithiumaluminiumhydrid analog Beispiel 5 umgesetzt.
Man erhält ein farbloses Öl.
Ausbeute: 2,9 g (88 % d.Th.);
³¹P-NMR-Spektrum:
(Benzol-d₆) δ = 7,69 ppm
FAB-Massenspektrum:
M^{┐ +} = 398

### Beispiel 9:

### Herstellung von (S)-2-Diphenylphosphinomethyl-2'-methyl-1,1'-binapthyl

1 g (1,83 mMol) (S)-4,4-Diphenyl-4,5-dihydro-3H-dinaphtho-[2,1-c:1',2'-e]-phosphepiniumbromid werden in 40 ml absolutem Toluol unter Schutzgas suspendiert und mit 200 mg (5,7 mMol) Lithiumaluminiumhydrid analog Beispiel 5 umgesetzt.
Ausbeute: 500 mg (58,9 % d.Th.)
[α]²⁰_{D} = -138,4° (gemessen in Dichlormethan)
Schmelzpunkt: 131 bis 132°C
³¹P-NMR-Spektrum:
(Benzol-d₆) δ = -11,86 ppm
FAB-Massenspektrum:
M^{┐ +} = 466

## Patentansprüche

1. Verfahren zur Herstellung von Phosphanen der allgemeinen Formel (I) 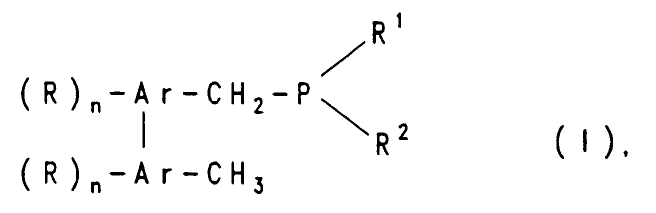 dadurch gekennzeichnet, daß man eine Verbindung der allgemeinen Formel (II) 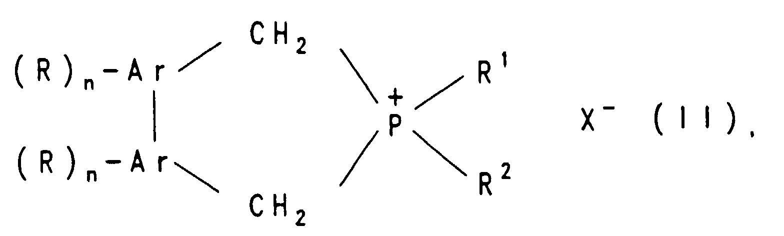 worin Ar-Ar für einen Biphenylrest, einen 1-Phenylnaphthylrest oder einen 1,1'-Binaphthylrest steht, die CH₂-Gruppe jeweils in ortho-Stellung zur Ar-Ar-Bindung angeordnet ist, R für F, einen Alkylrest oder Alkoxyrest mit jeweils 1 bis 8 Kohlenstoffatomen steht, n eine ganze Zahl von 0 bis 4 ist, R¹ und R² gleich oder verschieden sind und unabhängig voneinander für einen Alkylrest mit 1 bis 10 Kohlenstoffatomen, einen cycloaliphatischen Rest mit 5 bis 10 Kohlenstoffatomen, oder für einen Rest Ar¹-(R³)ₘ stehen, wobei Ar¹ ein Phenyl- oder Naphthylrest ist, R³ für F, Cl, CF₃, SO₃H, SO₃Me (Me = Li, Na oder K), einen Dialkylaminorest mit 2 bis 8 Kohlenstoffatomen, einen Alkylrest oder Alkoxyrest mit jeweils 1 bis 8 Kohlenstoffatomen steht und m eine ganze Zahl von 0 bis 5 ist, oder R¹ und R² zusammen mit dem P-Atom einen Ring mit 4 bis 8 Gliedern bilden, woran gegebenenfalls ein oder zwei aromatische, 6 bis 10 Kohlenstoffatome umfassende Ringe oder Ringsysteme anneliert sind, und X⁻ ein einwertiges Anion oder das Äquivalent eines mehrwertigen Anions einer Mineralsäure, Carbonsäure, Sulfonsäure oder eines Alkohols darstellt, mit einer wäßrigen Lösung einer Base, gegebenenfalls in Anwesenheit eines Lösungsvermittlers, umsetzt, das dabei sich bildende Phosphanoxid der allgemeinen Formel (III) 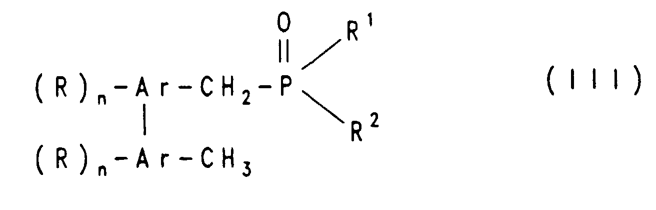 isoliert und dieses anschließend, gegebenenfalls in Anwesenheit eines inerten Lösungsmittels, zum Phosphan der Formel (I) reduziert oder die Verbindung der Formel (II), gegebenenfalls in Anwesenheit eines inerten Lösungsmittels, mit einem Reduktionsmittel direkt zum Phosphan der Formel (I) umsetzt.

2. Verfahren nach Anspruch 1, dadurch gekennzeichnet, daß man eine Verbindung der Formel (II), worin Ar-Ar für einen Biphenylrest, einen 1-Phenylnaphthylrest oder einen 1,1'-Binaphthylrest und R für einen Alkylrest oder Alkoxyrest mit jeweils 1 bis 4 Kohlenstoffatomen steht, einsetzt.

3. Verfahren nach Anspruch 1 oder 2, dadurch gekennzeichnet, daß man eine Verbindung der Formel (II), worin n für 0 oder 1 steht, einsetzt.

4. Verfahren nach einem oder mehreren der Ansprüche 1 bis 3, dadurch gekennzeichnet, daß man eine Verbindung der Formel (II), worin n für 0 steht, einsetzt.

5. Verfahren nach einem oder mehreren der Ansprüche 1 bis 4, dadurch gekennzeichnet, daß man eine Verbindung der Formel (II) in der (R,S)-Form, in der (R)-Form oder in der (S)-Form einsetzt.

6. Verfahren nach einem oder mehreren der Ansprüche 1 bis 5, dadurch gekennzeichnet, daß man eine Verbindung der Formel (II), worin Ar-Ar für 1,1'-Binaphthyl steht, in der (R,S)-Form, in der (R)-Form oder in der (S)-Form einsetzt.

7. Verfahren nach einem oder mehreren der Ansprüche 1 bis 6, dadurch gekennzeichnet, daß man eine Verbindung der Formel (II), worin R¹ und R² gleich oder verschieden sind und unabhängig voneinander für einen Alkylrest mit 1 bis 6 Kohlenstoffatomen, einen cycloaliphatischen Rest mit 5 bis 6 Kohlenstoffatomen oder für einen Rest Ar¹-(R³)ₘ stehen, wobei Ar¹ ein Phenylrest ist, R³ für F, CF₃ oder einen Alkylrest mit 1 bis 4 Kohlenstoffatomen und m für 0 oder 1 steht, oder R¹ und R² zusammen mit dem P-Atom einen Ring bilden und für CH₂-Ar(R)ₙ-Ar(R)ₙ-CH₂ stehen, einsetzt.

8. Verfahren nach einem oder mehreren der Ansprüche 1 bis 7, dadurch gekennzeichnet, daß man als Base ein Oxid, Hydroxid oder Carbonat eines Alkalimetalls oder Erdalkalimetalls einsetzt.

9. Verfahren nach einem oder mehreren der Ansprüche 1 bis 8, dadurch gekennzeichnet, daß man als Lösungsvermittler ein polares, wasserlösliches organisches Lösungsmittel oder einen Phasentransferkatalysator einsetzt.

10. Verfahren nach einem oder mehreren der Ansprüche 1 bis 9, dadurch gekennzeichnet, daß man als Lösungsvermittler einen aliphatischen Alkohol mit 1 bis 4 Kohlenstoffatomen, Tetrahydrofuran, Dioxan, Acetonitril, N,N-Dimethylformamid oder N,N-Dimethylacetamid einsetzt.

11. Verfahren nach einem oder mehreren der Ansprüche 1 bis 10, dadurch gekennzeichnet, daß man die Verbindung der Formel (II) mit der wäßrigen Lösung der Base bei 0 bis 120, insbesondere 10 bis 110, bevorzugt 20 bis 100°C umsetzt.

12. Verfahren nach einem oder mehreren der Ansprüche 1 bis 11, dadurch gekennzeichnet, daß man das Phosphanoxid der Formel (III) durch Extraktion mittels eines wasserunlöslichen organischen Lösungsmittels isoliert.

13. Verfahren nach einem oder mehreren der Ansprüche 1 bis 12, dadurch gekennzeichnet, daß man das Phosphanoxid der Formel (III) in Anwesenheit von Toluol, o-Xylol, m-Xylol, p-Xylol, Gemischen isomerer Xylole, Dioxan und Acetonitril als inertem Lösungsmittel reduziert.

14. Verfahren nach einem oder mehreren der Ansprüche 1 bis 13, dadurch gekennzeichnet, daß man das Phosphanoxid der Formel (III) mittels eines Hydrids oder mittels eines, gegebenenfalls in Anwesenheit eines tertiären Amins verwendeten Organylsilans, Organyldichlorsilans oder Trichlorsilan, reduziert.

15. Verfahren nach einem oder mehreren der Ansprüche 1 bis 14, dadurch gekennzeichnet, daß man das Phosphanoxid der Formel (III) mit Lithiumaluminiumhydrid reduziert.

16. Verfahren nach einem oder mehreren der Ansprüche 1 bis 14, dadurch gekennzeichnet, daß man das Phosphanoxid der Formel (III) mit Methyldichlorsilan, Ethyldichlorsilan oder Phenyldichlorsilan reduziert.

17. Verfahren nach einem oder mehreren der Ansprüche 1 bis 16, dadurch gekennzeichnet, daß man das Phosphanoxid der Formel (III) bei 20 bis 170, insbesondere 40 bis 160, bevorzugt 60 bis 150°C reduziert.

18. Verfahren nach einem oder mehreren der Ansprüche 1 bis 7, dadurch gekennzeichnet, daß man die Verbindung der Formel (II) in Anwesenheit von Tetrahydrofuran, Dioxan, Toluol, o-Xylol, m-Xylol, p-Xylol, einem Gemisch isomerer Xylole, Ethylbenzol als inertem Lösungsmittel mit einem Reduktionsmittel zum Phosphan der Formel (I) umsetzt.

19. Verfahren nach einem oder mehreren der Ansprüche 1 bis 7 und 18, dadurch gekennzeichnet, daß man die Verbindung der Formel (II) mit einem Hydrid als Reduktionsmittel zum Phosphan der Formel (I) umsetzt.

20. Verfahren nach einem oder mehreren der Ansprüche 1 bis 7 und 18 bis 19, dadurch gekennzeichnet, daß man die Verbindung der Formel (II) mit Natriumhydrid, Kaliumhydrid, Lithiumaluminiumhydrid, Natriumborhydrid, Diisobutylaluminiumhydrid, Natriumdihydrido-bis(2-methoxyethoxy)-aluminat zum Phosphan der Formel (I) umsetzt.

21. Verfahren nach einem oder mehreren der Ansprüche 1 bis 7 und 18 bis 20, dadurch gekennzeichnet, daß man die Verbindung der Formel (II) mit dem Reduktionsmittel bei 50 bis 200, insbesondere 60 bis 160, bevorzugt 70 bis 150°C zum Phosphan der Formel (I) umsetzt.

22. Verwendung der Phosphane der allgemeinen Formel (I) nach Anspruch 1 als Antioxidantien.

## Claims

1. A process for preparing phosphines of the formula (I) 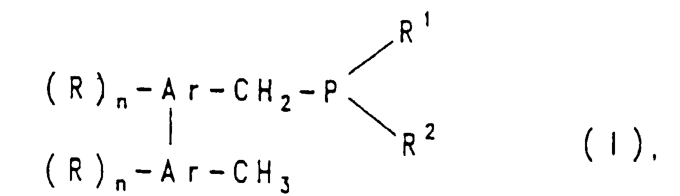 characterised in that a compound of the formula (II) 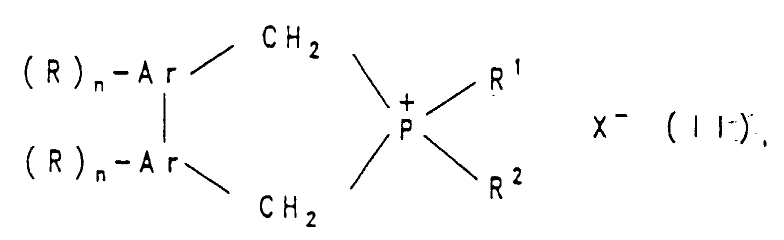 where Ar-Ar is a biphenyl radical, a 1-phenylnaphthyl radical or a 1,1'-binaphthyl radical, the CH₂ group is in each case in the ortho position to the Ar-Ar bond, R is F, an alkyl radical or alkoxy radical each having 1 to 8 carbon atoms, n is an integer from 0 to 4, R¹ and R² are identical or different and are each, independently of one another, an alkyl radical having 1 to 10 carbon atoms, a cycloaliphatic radical having 5 to 10 carbon atoms or a radical Ar¹-(R³)ₘ, where Ar¹ is a phenyl or naphthyl radical , R³ is F, Cl, CF₃, SO₃H, SO₃Me (Me = Li, Na or K), a dialkylamino radical having 2 to 8 carbon atoms, an alkyl radical or alkoxy radical each having 1 to 8 carbon atoms and m is an integer from 0 to 5, or R¹ and R² together with the phosphorus atom form a 4-membered to 8-membered ring to which can be fused, optionally, one or two aromatic rings or ring systems comprising 6 to 10 carbon atoms, and X⁻ is a monovalent anion or the equivalent of a polyvalent anion of a mineral acid, carboxylic acid, sulfonic acid or of an alcohol, is reacted with an aqueous solution of a base in the presence or absence of a solubiliser, the phosphine oxide of the formula (III) 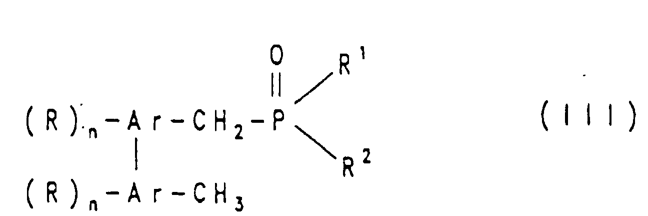 formed in the reaction is isolated and the latter subsequently reduced in the presence or absence of an inert solvent to give the phosphine of the formula (I), or the compound of the formula (II) is reacted in the presence or absence of an inert solvent directly with a reducing agent to give the phosphine of the formula (I).

2. The process according to claim 1, characterised in that the compound of the formula (II) used is one in which Ar-Ar is a biphenyl radical, a 1-phenylnaphthyl radical or a 1,1'-binaphthyl radical and R is an alkyl radical or alkoxy radical, each having 1 to 4 carbon atoms.

3. The process according to claim 1 or 2, characterised in that the compound of the formula (II) used is one in which n is 0 or 1.

4. The process according to one or more of claims 1 to 3, characterised in that the compound of the formula (II) is one in which n is 0.

5. The process according to one or more of claims 1 to 4, characterised in that the compound of the formula (II) used is in the (R, S) form, in the (R) form or in the (S) form.

6. The process according to one or more of claims 1 to 5, characterised in that the compound of the formula (II) used is in the (R, S) form, in the (R) form or in the (S) form and is a compound in which Ar-Ar is 1,1'-binaphthyl.

7. The process according to one or more of claims 1 to 6, characterised in that the compound of the formula (II) used is one in which R¹ and R² are identical or different and are each, independently of one another, an alkyl radical having 1 to 6 carbon atoms, a cycloaliphatic radical having 5 or 6 carbon atoms or a radical Ar¹-(R³)ₘ, where Ar¹ is a phenyl radical, R³ is F, CF₃ or an alkyl radical having 1 to 4 carbon atoms and m is 0 or 1, or R¹ and R² together with the phosphorus atom form a ring and are CH₂-Ar(R)ₙ-Ar(R)ₙ-CH₂.

8. The process according to one or more of claims 1 to 7, characterised in that the base used is an oxide, hydroxide or carbonate of an alkali metal or an alkaline earth metal.

9. The process according to one or more of claims 1 to 8, characterised in that a polar, water-soluble organic solvent or a phase transfer catalyst is used as solubiliser.

10. The process according to one or more of claims 1 to 9, characterised in that an aliphatic alcohol having 1 to 4 carbon atoms, tetrahydrofuran, dioxane, acetonitrile, N,N-dimethylformamide or N,N-dimethylacetamide is used as solubiliser.

11. The process according to one or more of claims 1 to 10, characterised in that the compound of the formula (II) is reacted with the aqueous solution of the base at 0 to 120°C, in particular 10 to 110°C, preferably 20 to 100°C.

12. The process according to one or more of claims 1 to 11, characterised in that the phosphine oxide of the formula (II) is isolated by extraction using a water-insoluble organic solvent.

13. The process according to one or more of claims 1 to 12, characterised in that the phosphine oxide of the formula (III) is reduced in the presence of toluene, o-xylene, m-xylene, p-xylene, mixtures of isomeric xylenes, dioxane or acetonitrile as inert solvent.

14. The process according to one or more of claims 1 to 13, characterised in that the phosphine oxide of the formula (III) is reduced by means of a hydride or by means of an organosilane, organodichlorosilane or trichlorosilane used in the presence or absence of a tertiary amine.

15. The process according to one or more of claims 1 to 14, characterised in that the phosphine oxide of the formula (III) is reduced with lithium aluminium hydride.

16. The process according to one or more of claims 1 to 14, characterised in that the phosphine oxide of the formula (III) is reduced with methyldichlorosilane, ethyldichlorosilane or phenyldichlorosilane.

17. The process according to one or more of claims 1 to 16, characterised in that the phosphine oxide of the formula (III) is reduced at 20 to 170°C, in particular 40 to 160°C, preferably 60 to 150°C.

18. The process according to one or more of claims 1 to 7, characterised in that the compound of the formula (II) is reacted with a reducing agent in the presence of tetrahydrofuran, dioxane, toluene, o-xylene, m-xylene, p-xylene, a mixture of isomeric xylenes, ethylbenzene as inert solvent to give the phosphine of the formula (I).

19. The process according to one or more of claims 1 to 7 and 18, characterised in that the compound of the formula (II) is reacted with a hydride as reducing agent to give the phosphine of the formula (I).

20. The process according to one or more of claims 1 to 7 and 18 to 19, characterised in that the compound of the formula (II) is reacted with sodium hydride, potassium hydride, lithium aluminium hydride, sodium borohydride, diisobutylaluminium hydride, sodium, dihydrido-bis(2-methoxyethoxy)aluminate to give the phosphine of the formula (I).

21. The process according to one or more of claims 1 to 7 and 18 to 20, characterised in that the compound of the formula (II) is reacted with the reducing agent at 50 to 200°C, in particular 60 to 160°C, preferably 70 to 150°C, to give the phosphine of the formula (I).

22. The use of a phosphine of the formula (I) according to claim 1 as an antioxidant.

## Revendications

1. Procédé de préparation de phosphanes de formule générale (I) 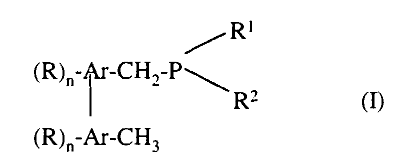 caractérisé en ce qu'un composé de formule générale (II) 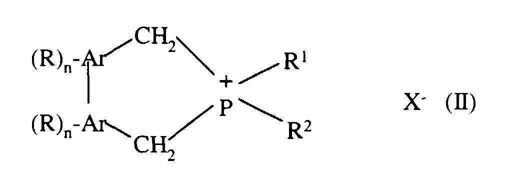 où Ar-Ar représente un reste biphényle, un reste 1-phénylnaphtyle ou un reste 1,1'-binaphtyle, le groupe CH₂ est disposé dans chaque cas en position ortho par rapport à la liaison Ar-Ar, R représente F, un reste alkyle ou un reste alcoxy ayant dans chaque cas 1 à 8 atomes de carbone, n est un nombre entier de 0 à 4, R¹ et R² sont identiques ou différents et représentent indépendamment l'un de l'autre un reste alkyle de 1 à 10 atomes de carbone, un reste cycloaliphatique de 5 à 10 atomes de carbone ou un reste Ar¹-(R³)ₘ où Ar¹ est un reste phényle ou naphtyle, R³ représente F, Cl, CF₃, SO₃H, SO₃Me (Me = Li, Na ou K), un reste dialkylamino de 2 à 8 atomes de carbone, un reste alkyle ou un reste alcoxy ayant dans chaque cas 1 à 8 atomes de carbone et m est un nombre entier de 0 à 5, ou bien R¹ et R² forment avec l'atome P un cycle de 4 à 8 chaînons auquel sont éventuellement condensés un ou deux cycles ou systèmes cycliques aromatiques comprenant 6 à 10 atomes de carbone, et X⁻ est un anion monovalent ou l'équivalent d'un anion plurivalent d'un acide minéral, d'un acide carboxylique, d'un acide sulfonique ou d'un alcool, est mis à réagir avec une solution aqueuse d'un base, éventuellement en présence d'un promoteur de dissolution, l'oxyde de phosphane de formule générale (III) 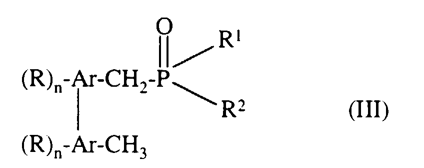 qui se forme alors est isolé puis réduit en le phosphane de formule (I) éventuellement en présence d'un solvant inerte, ou bien le composé de formule (II), éventuellement en présence d'un solvant inerte, est converti directement en le phosphane de formule (I) avec un réducteur.

2. Procédé selon la revendication 1, caractérisé en ce que l'on utilise un composé de formule (II) où Ar-Ar représente un reste biphényle, un reste 1-phénylnaphtyle ou un reste 1,1'-binaphtyle et R représente un reste alkyle ou un reste alcoxy ayant 1 à 4 atomes de carbone dans chaque cas.

3. Procédé selon la revendication 1 ou 2, caractérisé en ce que l'on utilise un composé de formule (II) où n représente 0 ou 1.

4. Procédé selon une ou plusieurs des revendications 1 à 3, caractérisé en ce que l'on utilise un composé de formule (II) où n représente 0.

5. Procédé selon une ou plusieurs des revendications 1 à 4, caractérisé en ce que l'on utilise un composé de formule (II) sous la forme (R,S), sous la forme (R) ou sous la forme (S).

6. Procédé selon une ou plusieurs des revendications 1 à 5, caractérisé en ce que l'on utilise un composé de formule (II) où Ar-Ar représente 1,1'-binaphtyle, sous la forme (R,S), sous la forme (R) ou sous la forme (S).

7. Procédé selon une ou plusieurs des revendications 1 à 6, caractérisé en ce que l'on utilise un composé de formule (II) où R¹ et R² sont identiques ou différents et représentent indépendamment l'un de l'autre un reste alkyle de 1 à 6 atomes de carbone, un reste cycloaliphatique de 5 à 6 atomes de carbone ou un reste Ar¹-(R³)ₘ où Ar¹ est un reste phényle, R³ représente F, CF₃ ou un reste alkyle de 1 à 4 atomes de carbone et m représente 0 ou 1, ou bien R¹ et R² forment un cycle avec l'atome P et représentent CH₂-Ar(R)ₙ-Ar(R)ₙ-CH₂.

8. Procédé selon une ou plusieurs des revendications 1 à 7, caractérisé en ce que l'on utilise comme base un oxyde, hydroxyde ou carbonate d'un métal alcalin ou d'un métal alcalino-terreux.

9. Procédé selon une ou plusieurs des revendications 1 à 8, caractérisé en ce que l'on utilise comme promoteur de dissolution un solvant organique polaire soluble dans l'eau ou un catalyseur de transfert de phase.

10. Procédé selon une ou plusieurs des revendications 1 à 9, caractérisé en ce que l'on utilise comme promoteur de dissolution un alcool aliphatique de 1 à 4 atomes de carbone, le tétrahydrofurane, le dioxane, l'acétonitrile, le N,N-diméthylformamide ou le N,N-diméthylacétamide.

11. Procédé selon une ou plusieurs des revendications 1 à 10, caractérisé en ce que l'on fait réagir le composé de formule (II) avec la solution aqueuse de la base à 0 à 120, en particulier 10 à 110, de préférence 20 à 100°C.

12. Procédé selon une ou plusieurs des revendications 1 à 11, caractérisé en ce que l'on isole l'oxyde de phosphane de formule (III) par extraction au moyen d'un solvant organique insoluble dans l'eau.

13. Procédé selon une ou plusieurs des revendications 1 à 12, caractérisé en ce que l'on réduit l'oxyde de phosphane de formule (III) en présence de toluène, de o-xylène, de m-xylène, de p-xylène, de mélanges de xylènes isomères, de dioxane et d'acétonitrile comme solvant inerte.

14. Procédé selon une ou plusieurs des revendications 1 à 13, caractérisé en ce que l'on réduit l'oxyde de phosphane de formule (III) au moyen d'un hydrure ou au moyen d'un organylsilane, d'un organyldichlorosilane ou de trichlorosilane éventuellement utilisé en présence d'une amine tertiaire.

15. Procédé selon une ou plusieurs des revendications 1 à 14, caractérisé en ce que l'on réduit l'oxyde de phosphane de formule (III) avec l'hydrure d'aluminium et de lithium.

16. Procédé selon une ou plusieurs des revendications 1 à 14, caractérisé en ce que l'on réduit l'oxyde de phosphane de formule (III) avec le méthyldichlorosilane, l'éthyldichlorosilane ou le phényldichlorosilane.

17. Procédé selon une ou plusieurs des revendications 1 à 16, caractérisé en ce que l'on réduit l'oxyde de phosphane de formule (III) à 20 à 170, en particulier 40 à 160, de préférence 60 à 150°C.

18. Procédé selon une ou plusieurs des revendications 1 à 7, caractérisé en ce que l'on convertit le composé de formule (II) en le phosphane de formule (I) avec un réducteur en présence de tétrahydrofurane, de dioxane, de toluène, de o-xylène, de m-xylène, de p-xylène, d'un mélange de xylènes isomères, d'éthylbenzène comme solvant inerte.

19. Procédé selon une ou plusieurs des revendications 1 à 7 et 18, caractérisé en ce que l'on convertit le composé de formule (II) en le phosphane de formule (I) avec un hydrure comme réducteur.

20. Procédé selon une ou plusieurs des revendications 1 à 7 et 18 à 19, caractérisé en ce que l'on convertit le composé de formule (II) en le phosphane de formule (I) avec l'hydrure de sodium, l'hydrure de potassium, l'hydrure d'aluminium et de lithium, le borohydrure de sodium, l'hydrure de diisobutylaluminium, le dihydruro-bis(2-méthoxyéthoxy)aluminate de sodium.

21. Procédé selon une ou plusieurs des revendications 1 à 7 et 18 à 20, caractérisé en ce que l'on convertit le composé de formule (II) en le phosphane de formule (I) avec le réducteur à 50 à 200, en particulier 60 à 160, de préférence 70 à 150°C.

22. Utilisation des phosphanes de formule générale (I) selon la revendication 1 comme antioxydants.
